Europäisches Patentamt

European Patent Office

Office européen des brevets

(11) Publication number: **0 520 567 A1**

## EUROPEAN PATENT APPLICATION

(21) Application number: **92201819.7**

(22) Date of filing: **22.06.92**

(51) Int. Cl.⁵: **F16K 25/00, E21B 34/02**

(30) Priority: **24.06.91 NO 912456**

(43) Date of publication of application:
**30.12.92 Bulletin 92/53**

(84) Designated Contracting States:
**DE FR GB NL**

(71) Applicant: **NORSK HYDRO TECHNOLOGY B.V.**
**P.O. Box 2**
**NL-4540 AA Sluiskil(NL)**

(72) Inventor: **Skyllingstad, Olav**
**2, rue de l'Epte**
**F-76133 Epouvilles(FR)**
Inventor: **Nokleberg, Lars**
**Alfheimveien 11B**
**N-1342 Jar(NO)**
Inventor: **Sontvedt, Terje**
**Sondre Gjettum 58**
**N-1346 Gjettum(NO)**

(54) **Erosion resistant valve.**

(57) An erosion resistant pressure reduction valve or choke is provided. It comprises a valve housing (1) with an inlet (2), a valve chamber (4) and an outlet (3), a valve seat arranged in the valve chamber, a closure (5) for the valve housing, and a plug (11) axially displaceable by means of a spindle (12) or the like arranged in the closure. The plug (11) is adapted to be displaced from an upper position where the valve is open to a lower position where the valve is shut and the lower end of the plug abuts the valve seat. A casing (8) produced in one piece of polycrystalline diamond constitutes the valve seat.

EP 0 520 567 A1

The present invention provides a pressure reduction valve or choke which retards erosion. The inventive valve comprises a valve housing defining a valve chamber, an inlet and an outlet, a valve seat arranged in the valve chamber, a closure for the valve housing, and a plug arranged in the closure and axially displaceable by means of a spindle or the like, the plug being arranged to be displaced from an upper position where the valve is open to a lower position where the valve is closed and the lower end of the plug rests or fits against the valve seat.

In connection with the exploitation of oil and gas, pressure reduction valves or chokes are used to control the pressure and the stream of oil and gas from subterranean reservoirs. Usually, these chokes sit in a christmas tree of a particular oil well. They are arranged so as to be demounted for maintenance or replacement.

The chokes often operate under very difficult conditions of high temperature and pressure and with high current velocities. Often, the oil and gas contain sand particles; erosion may frequently be extreme in exposed parts of the chokes. Consequently, these parts or entire chokes have to be replaced after a short time.

Replacement and maintenance of the chokes is risky because of the high pressure under which they operate. Special safety precautions must be taken to reduce the danger of pollution to the surroundings and to avoid injury to persons doing the maintenance and replacement. When oil and gas are exploited at great subsea depths, chokes are arranged on a christmas tree connected to seabed structures. Replacement and maintenance of the chokes in such installations is particularly risky and demanding, and the costs are high. Clearly, extension of the choke lifetime can achieve reduced replacement/maintenance costs. Therefore, efforts have been made to develop regulatable chokes with erosion-resistant properties. U.S. patent No. 4,732,364 discloses a choke in the form of a valve seat with a turnable, with an axially displaceable pin extending into a casing arranged in a valve housing. The pin has a conical portion corresponding to a complementary conical portion in the casing. The conical portions of the pin and casing are coated with polycrystalline diamond tiles to increase erosion resistance. By turning the pin, the fluid stream through the valve is regulated. The valve can be completely closed by turning the pin such that a projecting part of the pin rests against seat-shaped part at the upper end of the casing. The valve disclosed in this patent has not found any practical application since the tiles loosen and fall off. The valve is also expensive to make, both because the large number of specially designed tiles are expensive to produce and because painstaking work is required to bond the tiles.

An object of the present invention is to provide a choke or pressure reduction valve with a substantially longer lifetime, i.e. which is substantially more erosion resistant than conventional valves. Another object is to provide a pressure reduction valve substantially cheaper to make and simpler to maintain.

In accordance with the invention, a valve as characterized in the preceding paragraph has been produced. The inventive valve is characterized in that the valve seat is a one piece polycrystalline diamond casing, as stated in claim 1.

Dependent claims 2-7 define advantageous features of the invention.

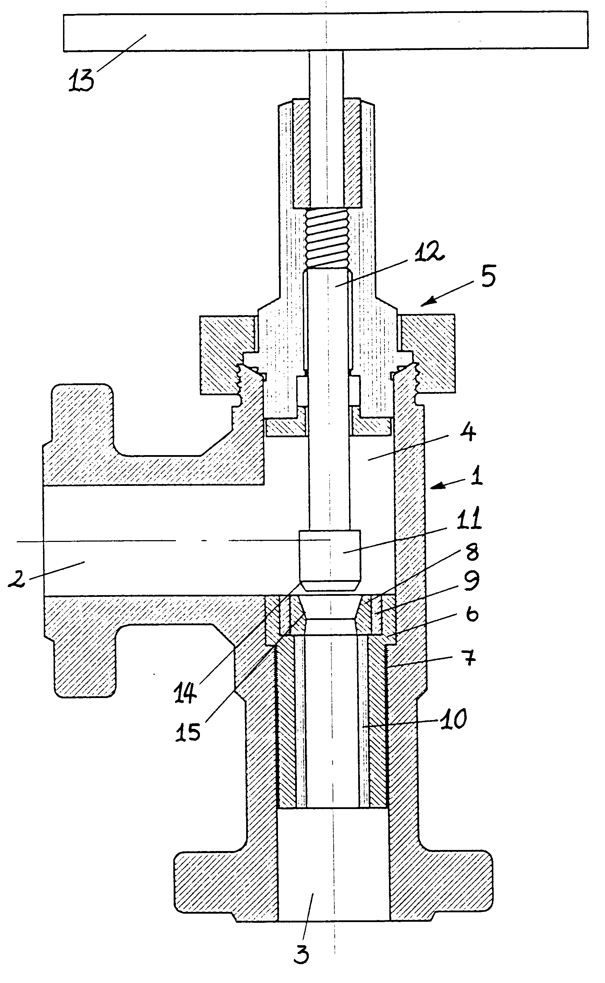

The invention shall now be described with an example and with reference to the attached drawing. It shows the inventive valve in cross section. The inventive valve comprises a valve housing 1 having an inlet 2, and outlet 3 and a valve chamber 4 with an upwardly directed opening closed by a closure 5. A bushing 6 is arranged in the lower end of the valve chamber and in a direction towards the outlet 3. The bushing 6 can advantageously be provided with a threaded connection 7 to facilitate replacement. Further, a valve seat 8 in the form of a casing 8 produced in one piece of polycrystalline diamond is arranged in a widened upper portion of the bushing 6. This casing 8 is advantageously anchored to an outer casing 9 of wolfram carbide, stainless steel or other suitable material. The valve seat, i.e. the outer casing 9, is fastened to the bushing 6 by means of a soldered connection, press fit or other suitable fastening method. One or more casings of an erosion-resistant material, e.g. wolfram carbide or polycrystalline diamond, are arranged downstream from the valve seat. The bushing 6 can itself be made of an erosion-resistant material such that the casings 10 are superfluous.

A plug 11 is arranged coaxial with the valve seat 8,9 and the outlet 3. The plug 11 is axially displaceable by means of a spindle 12 rotatable arranged in the valve closure 5. In the embodiment illustrated in the drawing, the spindle is turned manually by a grip 13. If the valve is remotely controlled, the spindle can be driven by a motor, or another solution can be used to move the plug 11, such as a hydraulic arrangement or the like. The closure 5 will not be further detailed. However, it is so formed that access to the valve chamber is easily attained by demounting the closure. In this simple manner, the plug and the valve seat can be taken out and replaced during valve maintenance.

The lower part of the plug 11 has a conical portion 14 complementary to a conical portion 15 in the valve seat. The valve seat and the plug are the valve parts most exposed to erosion. Also, these parts of the valve are the most critical regarding how much erosion can be allowed. Only a small degree of erosion of the plug or the seat could result in the inability of the valve to shut tightly or to adequately control fluid stream. The valve seat, as previously stated, consists of a casing of poycrystalline diamond. A polycrystalline diamond made in one piece can be used as the plug. Alternatively, one or more casings of polycrystalline diamond or a polycrystalline diamond layer applied in accordance with the vapour deposition method can be used.

Although the valve seat and the plug are most exposed to erosion, the other interior parts of the valve are also exposed to varying degrees of erosion. As stated above, the bush 6 is provided with one or more casings of wolfram carbide or a similar material for increasing corrosion resistance. The invention is, however, not limited to this embodiment. Thus, other parts of the valve like the spindle and parts of the inlet and valve chamber can be provided with such casings or plates.

**Claims**

1. An erosion resistant pressure reduction valve or choke comprising a valve housing (1) with an inlet (2), a valve chamber (4) and an outlet (3), a valve seat arranged in the valve chamber, a closure (5) for the valve housing, and a plug (11) axially displaceable by means of a spindle (12) or the like arranged in the closure, wherein the plug (11) is adapted to be displaced from an upper position where the valve is open to a lower position where the valve is shut and the lower end of the plug abuts the valve seat,
   **characterized in that**
   the valve seat is a casing (8) produced in one piece of polycrystalline diamond.

2. The valve of claim 1,
   **characterized in that**
   the casing (8) of polycrystalline diamond is anchored to an external casing (9) of wolfram carbide, stainless steel or similar material.

3. The valve of claims 1 and 2,
   **characterized in that**
   the valve seat is arranged in a bushing (6) in the valve chamber, and the bushing extends towards the valve housing's outlet (3).

4. The valve of claim 3,
   **characterized in that**
   the bushing downstream of the valve seat consists of or is provided with casings (10) av wolfram carbide, titanium carbide polycrystalline diamond or a similar erosion resistant material.

5. The valve of claims 1-3,
   **characterized in that**
   the plug (11) is provided with one or a plurality of external casings of polycrystalline diamond.

6. The valve of claims 1-3,
   **characterized in that**
   the plug (11) is coated with a layer of polycrystalline diamond in accordance with the vapour deposition method.

7. The valve of claims 1-3,
   **characterized in that**
   the plug (11) or parts of it are made in one piece of polycrystalline diamond.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | US-A-4 732 364 (SEGER ET AL.) <br> * the whole document * <br> --- | 1-7 | F16K25/00 <br> E21B34/02 |
| A | DE-A-3 728 946 (BRAN + LUEBBE) <br> * column 4, line 26 - line 64; figure 2 * <br> --- | 1 | |
| A | EP-A-0 195 933 (EG & G SEALOL) <br> * the whole document * <br> --- | 1 | |
| P,A | EP-A-0 480 895 (SANDVIK) <br> ----- | | |
| | | | TECHNICAL FIELDS SEARCHED (Int. Cl.5 ) |
| | | | F16K <br> E21B <br> B01J |

The present search report has been drawn up for all claims

| Place of search | Date of completion of the search | Examiner |
|---|---|---|
| THE HAGUE | 01 OCTOBER 1992 | CHRISTENSEN C. W. |